# EUROPÄISCHE PATENTSCHRIFT

(11) **EP 2 374 208 B1**
(45) Veröffentlichungstag und Bekanntmachung des Hinweises auf die Patenterteilung: **11.07.2018**
(21) Anmeldenummer: 08875077.3
(22) Anmeldetag: 11.12.2008
(51) Int. Cl.: H02P 25/14

(54) **ZÜNDÜBERWACHUNG FÜR LEISTUNSSCHALTER IN ELEKTROWERKZEUGGERÄT FÜR DEN BETRIEB MIT WECHSELSTROM**
ELECTRICAL POWER TOOL FOR OPERATING WITH ALTERNATING CURRENT
OUTIL PORTABLE ÉLECTRIQUE À FONCTIONNEMENT EN COURANT ALTERNATIF

(43) Veröffentlichungstag der Anmeldung: 12.10.2011
(73) Patentinhaber: Metabowerke GmbH, 72622 Nürtingen (DE)
(72) Erfinder: WIESNER, Bernd, 73277 Owen (DE)
(74) Vertreter: Markfort, Iris-Anne Lucie
(86) Internationale Anmeldenummer: PCT/EP2008/010516
(87) Internationale Veröffentlichungsnummer: WO 2010/066270

(56) Entgegenhaltungen:
- DE-A1- 3 522 586
- DE-A1-102005 062 864
- JP-A- 4 088 899

## Beschreibung

Die Erfindung betrifft ein Elektrowerkzeuggerät, insbesondere Elektrohandwerkzeuggerät, für den Betrieb mit Wechselstrom, mit einem Elektromotor, einer elektronischen Steuereinrichtung und einem elektrischen Leistungsschalter zum Ansteuern des Elektromotors.

Derartige Elektrowerkzeuggeräte sind bekannt. Typischerweise wird der Elektromotor derartiger Elektrowerkzeuggeräte durch Phasenanschnittsteuerung mit einer in der Regel einphasigen Netzwechselspannung versorgt. Dies erfolgt im Wege der Phasenanschnittsteuerung dadurch, dass der elektrische Leistungsschalter durch Anlegen eines Steuerpotentials bzw. Steuerstroms (Zündimpuls) durch die elektronische Steuereinrichtung "gezündet", d. h. in den leitenden Zustand gebracht wird, so dass infolge der am Elektromotor anliegenden Spannung ein Motorstrom fließen kann. Häufig stellt sich das Problem von sogenannten "Fehlzündungen", d. h. dass der Leistungsschalter nicht in den leitenden Zustand gebracht wurde oder in den nicht leitenden Zustand zurückgesprungen ist, etwa weil das Zündmoment nicht nach, sondern kurz vor einem Nulldurchgang des Motorstroms lag, so dass der Leistungsschalter durch den folgenden Strom-Nulldurchgang wieder deaktiviert, d. h. in den nicht leitenden Zustand gebracht wurde.

Um einen sicheren Betrieb und Rundlauf des Elektromotors, bei dem es sich insbesondere um einen Universalmotor handelt, zu gewährleisten, sollte sichergestellt werden, dass der Leistungsschalter ordnungsgemäß und entsprechend den Leistungsvorgaben bestimmungsgemäß zum korrekten Zeitpunkt während einer Halbwelle der Wechselspannung in den leitenden Zustand gebracht wird und auch im leitenden Zustand verbleibt.

Hierfür wäre es beispielsweise denkbar, dass durch Spannungsmessung am Leistungsschalter eine Zündüberwachung durchgeführt wird. Es wäre auch denkbar, dass eine Messung des Motorstroms ausgeführt wird; hierfür müsste allerdings ein niederohmiger Messwiderstand verwendet werden, der seinerseits wiederum einer Verstärkeranordnung für das Messsignal bedürfte. Beide Massnahmen sind aufwändig und in der hardwaremäßigen Realisierung kostenintensiv. Die Ausgabe mehrerer Zündimpulse hintereinander in vorgegebenem zeitlichen Abstand würde den Verbrauch unnötigen Zündstroms darstellen, für den Fall, dass der Leistungsschalter ordnungsgemäß in leitendem Zustand ist. Außerdem müsste ein Netzteil für die Ausführung der mehreren Zündimpulse entsprechend aufwändiger dimensioniert sein. Ein Konzept zur Zündüberwachung ist in der japanischen Patentanmeldung JP 40 888 99 A gezeigt.

Der vorliegenden Erfindung liegt die Aufgabe zugrunde, ein Elektrowerkzeuggerät der vorausgehend beschriebenen Art zu schaffen, bei dem auf wirtschaftliche Weise eine sichere bestimmungsgemäße bzw. anforderungsgemäße Ansteuerung des Elektromotors gewährleistet ist.

Diese Aufgabe wird durch ein Elektrowerkzeuggerät der genannten Art erfindungsgemäß dadurch gelöst, dass die elektronische Steuereinrichtung einen Vorspannungsausgang und einen Detektionseingang umfasst, die über einen einen Summationspunkt aufweisenden Spannungsteiler miteinander und mit der dem Elektromotor zugewandten Seite des Leistungsschalters verbunden sind, und die Steuereinrichtung ferner so ausgebildet ist, dass das Potential am Detektionseingang nach einem jeweiligen Zünden des Leistungsschalters überwacht wird und anhand dessen geprüft wird, ob der Leistungsschalter leitend ist, und dass erneut gezündet wird, wenn der Leistungsschalter nicht leitend war oder während der Überwachung in den nicht leitenden Zustand zurückgesprungen ist, und dass diese Überprüfung und gebotenenfalls erneute Zündung des Leistungsschalters innerhalb einer Halbwelle der Wechselspannung wiederholt wird. Dabei beträgt die Anzahl der Überprüfungen und erforderlichenfalls Zündungen des Leistungsschalters höchstens x, wobei x = T_{Halbwelle} / T_{Zündfolge} beträgt. T_{Zündfolge} bezeichnet dabei das Zeitintervall zwischen zwei Zündungen, das in der Steuerung vorgegeben ist.

Eine derartige Zündüberwachung des Leistungsschalters unter Verwendung einer Schaltungsanordnung mit zwei Widerständen in Verbindung mit einem Vorspannungsausgang und einem Detektionseingang der elektronischen Steuereinrichtung, die typischerweise einen Mikrocontroller umfasst, ist mit geringst möglichen Kosten hinsichtlich der hardwaremäßigen Realisierung verbunden. Auch die Anforderungen an die hierfür erforderliche Programmierung der elektronischen Steuereinrichtung sind verhältnismäßig gering. Es braucht lediglich im Anschluss an einen Zündimpuls eine vorzugsweise dauerhafte, also nicht nur punktuelle Potentialüberwachung am Detektionseingang der Steuereinrichtung durchgeführt zu werden. Unmittelbar nach der Zündung des Leistungsschalters steht hierfür am Spannungsteiler und somit am Detektionseingang ein Signal zur Verfügung, das auf diese Weise eine prinzipiell unmittelbare Beurteilung des Zustands des Leistungsschalters (leitend oder nicht leitend) gestattet. Es wird also erfindungsgemäß unmittelbar im Nachgang zu einer Zündung des Leistungsschalters durch die Steuereinrichtung überprüft, ob der Leistungsschalter bestimmungsgemäß gezündet wurde und auch dauerhaft im leitenden Zustand verbleibt. Sollte dies nicht der Fall sein, so wird es durch eine Signaländerung am Detektionseingang der Steuereinrichtung detektiert, und es können die weiteren Steuerungsmaßnahmen ausgeführt werden, nämlich eine erneute bedarfsgemäße Zündung des Leistungsschalters. Wiederum wird unmittelbar im Anschluss daran das Potential am Detektionseingang überwacht und überprüft, ob diese weitere Zündung des Leistungsschalters zu einem dauerhaften "Erfolg" führt oder ob der Leistungsschalter wieder in den nicht leitenden Zustand zurückspringt, so dass eine noch weitere Zündung eingeleitet wird.

Bei dem Leistungsschalter handelt es sich vorteilhafter Weise um einen Triac. Die Erfindung kann in vorteilhafter Weise auch bei Mehrphasensystemen Verwendung finden.

Die genannte Überprüfung und erforderlichenfalls Zündung des Leistungsschalters wird innerhalb einer Halbwelle nach einer Ausführungsform der Erfindung höchstens zehn Mal, insbesondere höchstens acht Mal, insbesondere höchstens sechs Mal und weiter insbesondere höchstens fünf Mal durchgeführt.

Wenn bei der Überprüfung festgestellt wird, dass der Leistungsschalter nicht leitend ist, so kann es sich als vorteilhaft erweisen, wenn eine Nachzündung sofort, also so rasch wie möglich erfolgt, sobald die Überprüfung des Signals am Detektionseingang ergeben hat, dass der Leistungsschalter nicht leitend ist. Dies kann insbesondere dann der Fall sein, wenn die erste Zündung des Leistungsschalters mittig innerhalb einer Halbwelle erfolgt.

Es kann sich aber auch als vorteilhaft erweisen, wenn in Weiterbildung der Erfindung die elektronische Steuereinrichtung so ausgebildet ist, dass eine Nachzündung erst nach einem vorgegebenen Zeitintervall erfolgt, so dass die Zündfolge bzw. T_{Zündfolge} 50 - bis 500 *µ*s, insbesondere 100 bis 500 *µ*s, insbesondere 150 bis 400 *µ*s und vorzugsweise 200 bis 300 *µ*s beträgt. Dies kann insbesondere dann der Fall sein, wenn die erste Zündung des Leistungsschalters zu Beginn einer Halbwelle erfolgt, etwa wenn der Strom-Nulldurchgang noch nicht erfolgt ist (in diesem Fall würde eine sofortige Nachzündung nicht zu dem erwünschten Erfolg führen, da der folgende Strom-Nulldurchgang den Leistungsschalter wieder öffen würde).

Die Zünddauer des Leistungsschalters beträgt vorzugsweise 5 bis 40 µs, insbesondere 15 bis 30 µs.

Die elektronische Steuereinrichtung umfasst vorteilhafterweise einen Synchronisiereingang, um den Nulldurchgang der jeweiligen Halbwelle zu erfassen. Auf diese Weise soll verhindert werden, dass der Leistungsschalter zu früh gezündet wird, also beispielsweise während eines Zeitintervalls, wenn der tatsächliche Motorstrom aufgrund induktiver Lasten des Elektromotors "nacheilt", also noch vor dem jeweiligen Strom-Nulldurchgang ist. In einem solchen Fall könnte der Leistungsschalter zwar durch Zündung in einen leitenden Zustand versetzt werden; er würde aber (wie vorausgehend schon erwähnt) bei dem sich anschließenden Nulldurchgang des Motorstroms sofort wieder in den nicht leitenden Zustand zurückspringen. Außerdem erweist sich eine vorzugsweise exakte Zündung des Leistungsschalters in Bezug auf die Halbwelle der betreffenden Phase als vorteilhaft, um eine bedarfsgerechte Ansteuerung des Elektromotors zu realisieren.

Die elektronische Steuereinrichtung ist ferner vorteilhafterweise so ausgebildet, dass der Vorspannungsausgang während einer positiven Halbwelle mit einer negativen Steuerspannung (low), insbesondere von -5 V, und während einer negativen Halbwelle mit einem demgegenüber höheren Potential, insbesondere Null Volt, (high) betrieben wird.

Des Weiteren betrifft die vorliegende Erfindung ein Verfahren zum Betreiben eines Elektrowerkzeuggeräts mit den Merkmalen des Anspruchs 10.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine schematische Darstellung der Energieversorgung und Ansteuerung bei einem erfindungsgemäßen Elektrowerkzeuggerät;
- Figur 2: ein Ablaufdiagramm bei der erfindungsgemäßen Ansteuerung des Elektrowerkzeuggeräts und
- Figur 3: eine Darstellung der Strom-/Spannungsparameter beim Betrieb des erfindungsgemäßen Elektrowerkzeuggeräts.

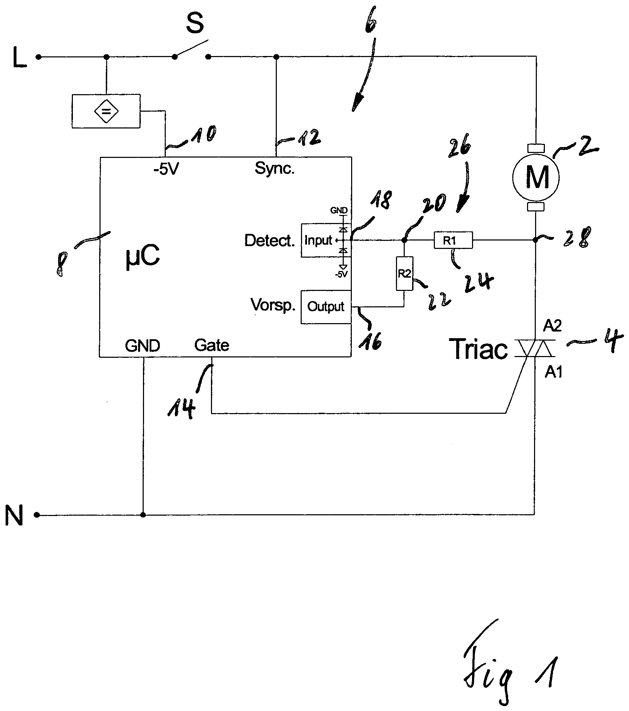

Figur 1 veranschaulicht die elektrische Energieversorgung eines Elektromotors 2 bei einem erfindungsgemäßen Elektrowerkzeuggerät. Dargestellt ist eine Phase L einer elektrischen Netz-Wechselspannung sowie der Nullleiter N. Ein elektrischer Anschluss einer Wicklung des Elektromotors 2 ist mit der Phase L verbunden und der andere unter Zwischenschaltung eines Leistungsschalters 4 mit dem Nullleiter N. Außerdem dargestellt ist eine insgesamt mit dem Bezugszeichen 6 bezeichnete elektronische Steuereinrichtung mit einem Mikrocontroller 8. Die elektronische Steuereinrichtung 6 bzw. der Mikrocontroller 8 wird direkt von der einen Phase L mit einer Betriebsspannung von -5 V versorgt (Betriebsspannungseingang 10). Des Weiteren ist ein Synchronisiereingang 12 vorgesehen, so dass die elektronische Steuereinrichtung 6 stets bezüglich eines Nulldurchgangs der Spannung der betreffenden Phase L synchronisierbar ist, d. h. der Zeitpunkt von Steuerungsvorgängen gegenüber dem Nulldurchgang der Phase L der Netzspannung zeitlich festlegbar ist. Über einen Steuerausgang 14 am Mikrocontroller 8 der elektronischen Steuereinrichtung 6 wird der Leistungsschalter 4, der vorzugsweise in Form eines Triac ausgebildet ist, angesteuert, indem ein Steuerimpuls (Zündimpuls) an den Leistungsschalter 4 gelegt wird, um den Leistungsschalter 4 in den leitenden Zustand zu versetzen, so dass die gegenwärtige Spannung der Phase L am Elektromotor 2 anliegt und infolgedessen ein Motorstrom durch die Wicklungen des Elektromotors fließt. Je nach Leistungsanforderung wird der Zeitpunkt des Zündimpulses innerhalb einer Halbwelle der Wechselspannung durch die elektronische Steuereinrichtung 6 gewählt. Je kürzer das Zeitintervall zwischen Zündimpuls und vorausgegangenem Nulldurchgang der Netzwechselspannung, desto größer ist das zeitliche Integral über die elektrische Leistung, die an den Elektromotor 2 gegeben wird. Dies gilt jedoch nur, sofern der Leistungsschalter 4 durch den Zündimpuls dauerhaft während der betreffenden Halbwelle im leitenden Zustand verbleibt, also geschlossen ist.

Die Steuereinrichtung 6 bzw. der Mikrocontroller 8 umfasst des Weiteren einen Vorspannungsausgang 16 und einen Detektionseingang 18, die über einen Summationspunkt 20 eines zwei Widerstände 22 und 24 umfassenden Spannungsteilers 26 miteinander und mit einem Anschluss 28 des Elektromotors 2 verbunden sind. Dieser Anschluss ist zwischen dem Elektromotor 2 und dem Leistungsschalter 4, so dass hierdurch letzten Endes ein Potential des Leistungsschalters 4 gegenüber dem Nullleiter N abgreifbar ist. Auf diese erfindungsgemäße Weise liegt am Detektionseingang 18 ein Signal an, welches im Anschluss an eine Zündung des Leistungsschalters 4 überwacht und zur Überprüfung des "Schaltzustands" des Leistungsschalters 4 durch die elektronische Steuereinrichtung 6 benutzt werden kann.

Sofern unmittelbar nach Aussendung eines Zündimpulses (über den Steuerausgang 14 der elektronischen Steuereinrichtung 6) durch Überwachung des Potentials am Detektionseingang festgestellt wird, dass der Leistungsschalter 4 nicht leitend ist oder in den nicht leitenden Zustand zurückgesprungen ist, so wird durch die elektronische Steuereinrichtung 6 ein erneuter Zündimpuls an den Leistungsschalter 4 gegeben. Diese Überprüfung und gebotenenfalls die Neuzündung des Leistungsschalters 4 während einer betreffenden Halbwelle der Netzwechselspannung kann mehrfach durchgeführt werden, und zwar nach einer ersten Ausführungsform derart, dass eine Nachzündung so rasch wie möglich, also quasi sofort erfolgt, wenn festgestellt wird, dass der Leistungsschalter nicht leitend ist, oder nach einer zweiten Ausführungsform derart, dass eine Zündfolge von insbesondere 50 - bis 500 µs realisiert wird, um die zur Verfügung stehende Periode der jeweiligen Halbwelle so optimal wie möglich zur Leistungsversorgung des Elektromotors 2 nutzen zu können. Der Vorgang kann aber auch in vorteilhafter Weise auf eine bestimmte Anzahl von Zyklen beschränkt werden.

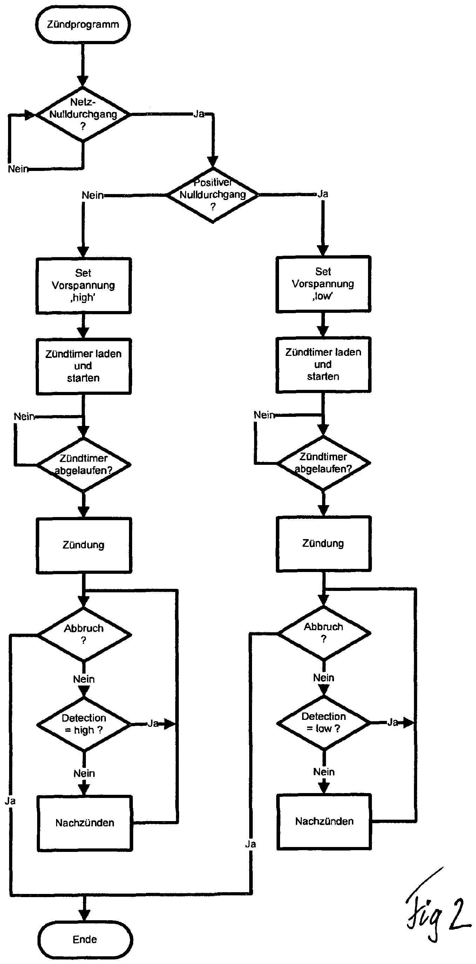

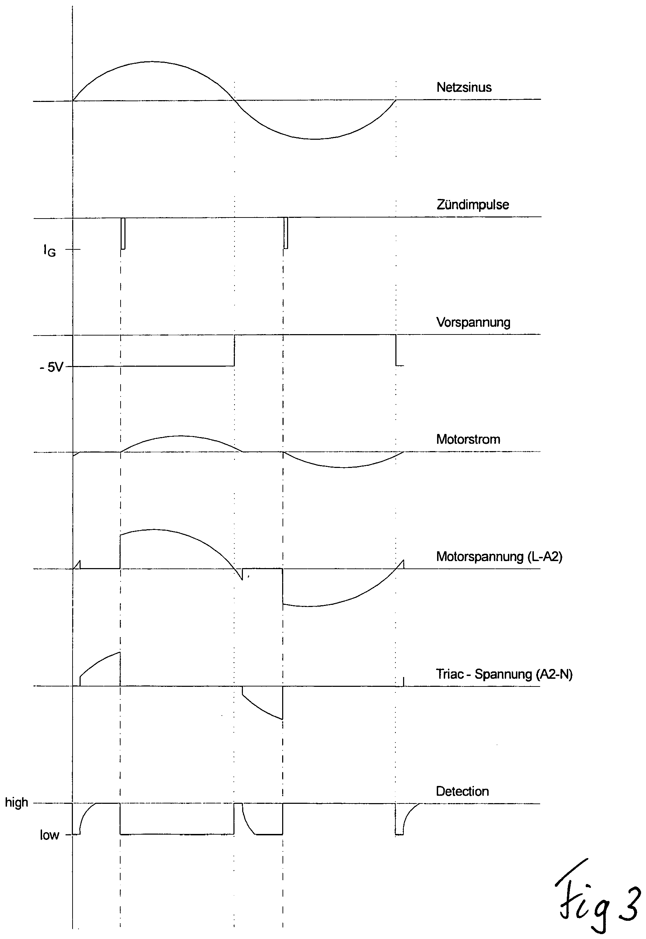

Die Figuren 2 und 3 verdeutlichen anhand eines Ablaufdiagramms und eines Spannungs- und Stromverlaufs den Betrieb des erfindungsgemäßen Elektrowerkzeuggeräts.

Figur 3 zeigt oben eine Schwingungsperiode einer Phase der Netzwechselspannung (mit Netzsinus bezeichnet). Darunter ist mit entsprechender Ausrichtung gegenüber dem Verlauf der Spannung der Phase jeweils ein Zündimpuls während der positiven und der darauf folgenden negativen Halbwelle der Wechselspannung von jeweils I_{G} dargestellt, wobei I_{G} vorteilhafterweise zwischen 1 - 50 mA, insbesondere etwa 25 mA, beträgt. Darunter ist die an den Spannungsteiler 26 angelegte Vorspannung am Vorspannungsausgang 16 der Steuereinrichtung 6 dargestellt. Diese Vorspannung beträgt im beispielhaft dargestellten Fall -5 V (Potential low) während der positiven Halbwelle der Netzwechselspannung und 0 V (Potential high) während der darauf folgenden negativen Halbwelle der Netzwechselspannung (nur beispielhaft).

In der Zeile darunter ist der durch eine Wicklung des Elektromotors 2 fließende Motorstrom dargestellt. Man erkennt, dass der Motorstrom im Zuge der Phasenanschnittsteuerung erst ab dem Zünden des Leistungsschalters 4 fließt, also erst wenn der Leistungsschalter 4 in den leitenden Zustand überführt wird, bis zum darauf folgenden Nulldurchgang der Netzwechselspannung (bzw. noch etwas länger infolge induktiver Effekte). Unterhalb des Motorstroms ist die Motorspannung, also die an den beiden Anschlüssen der betrachteten Wicklung des Elektromotors 2 abfallende Motorspannung dargestellt. Wenn der Leistungsschalter 4 leitend ist und ein Motorstrom fließt, dann fällt über die Klemmen des Elektromotors 2 die dargestellte Motorspannung ab.

In gleicher Weise ist die an dem Leistungsschalter 4 abfallende Spannung unterhalb der Motorspannung dargestellt. Schließlich ist in der untersten Zeile der Figur 3 die am Detektionseingang anstehende Spannung am Summationspunkt 20 des Spannungsteilers 26 dargestellt, die für Steuerzwecke überwacht und für die Überprüfung benutzt wird, ob der Leistungsschalter 4 leitend ist. Mit erfolgreichem Zünden des Leistungsschalters während der positiven Halbwelle liegt am Detektionseingang ein low-Potential an (insbesondere ca. -5V), und zwar bis zum anschließenden Nulldurchgang der Netzwechselspannung, jedoch nur sofern der Leistungsschalter bis zu diesem Zeitpunkt im leitenden Zustand verbleibt! Während der negativen Halbwelle sinkt die Spannung am Detektionseingang kontinuierlich von high-Potential (insbesondere 0 V) auf low-Potential (insbesondere -5 V), bis der Leistungsschalters infolge eines Zündimpulses in den leitenden Zustand versetzt wird. Der Detektionseingang springt dann auf high-Potential, was wiederum als Prüfparameter für ein ordnungsgemäßes Leiten des Leistungsschalters 4 durch die Steuereinrichtung 6 gewertet werden kann. Figur 3 zeigt also den ordnungsgemäßen Betrieb des Elektrowerkzeuggeräts, bei dem im Idealfall bei jedem Zündimpuls ein bestimmungsgemäßes Schließen des Leistungsschalters 4 und damit eine Energieversorgung des Elektromotors 2 realisiert wird.

Der Betrieb des erfindungsgemäßen Elektrowerkzeuggeräts und das erfindungsgemäße Verfahren ist außerdem anhand des Ablaufdiagramms gemäß Figur 2 ersichtlich. Die Ablaufroutine ist derart, dass die elektronische Steuereinrichtung entsprechend der aktuellen Leistungsanforderung einen Zündzeitpunkt für den Leistungsschalter 4 während einer Halbwelle der Netzwechselspannung entsprechend programmierter Vorgaben bestimmt. Um diesen bestimmten Zeitpunkt bezüglich der betrachteten Halbwelle der betrachteten Phase korrekt zu platzieren, wird anhand des Synchronisiereingangs 12 der Zeitpunkt des Nulldurchgangs der Netzwechselspannung dieser Phase überwacht. Sobald der Nulldurchgang festgestellt wird, wird überprüft, ob es sich um einen positiven oder negativen Nulldurchgang handelt (positiver Nulldurchgang bedeutet Beginn der positiven Halbwelle). Das Ablaufdiagramm wird dann in dem einen oder in dem anderen Strang weiterverfolgt. Wenn es sich um einen positiven Nulldurchgang, also den Beginn einer positiven Halbwelle handelt, so ist der rechte Strang des Ablaufdiagramms einschlägig. Am Vorspannungsausgang wird das Potential "low", also beispielsweise -5 V, angelegt. Der Zündtimer wird gestartet, und es wird dann entsprechend der Vorgabe der Steuereinrichtung bei Ablauf des Zündtimers (obiger Zündzeitpunkt) das erste Mal während der betrachteten Halbwelle ein Zündimpuls über den Steuerausgang 14 an den Leistungsschalter 4 gegeben. Es wird dann das Potential am Summationspunkt 20 über den Detektionseingang 18 überwacht. Sofern das anstehende Potential "low" ist und in dieser Form am Detektionseingang 18 ansteht, ist der Leistungsschalter 4 leitend, also geschlossen, und die Netzspannung liegt entsprechend ihres Verlaufs am Elektromotor 2 an.

Sollte jedoch am Detektionseingang 18 nicht das Potential "low" anliegen, sondern das Potential "high", so ist dies ein Hinweis darauf, dass der Leistungsschalter 4 wieder in den nicht leitenden Zustand zurückgesprungen ist. Es erfolgt dann eine sofortige Nachzündung und eine erneute Überwachung und Auswertung des Potentials am Detektionseingang 18. Dies wird zyklisch durchgeführt, wobei die Anzahl der Zyklen innerhalb einer Halbwelle sinnvoller Weise begrenzt ist, worauf eingangs hingewiesen wurde.

Ein entsprechender Verlauf für die negative Halbwelle lässt sich aus dem in Figur 2 links dargestellten Strang des Ablaufdiagramms entnehmen.

Beim Betrieb des erfindungsgemäßen Elektrowerkzeuggeräts bzw. bei der Ausführung des erfindungsgemäßen Verfahrens kann bei geringst möglichem hardwaremäßigem Aufwand eine betriebssichere Ansteuerung des Elektromotors erreicht werden, wobei eine geringst mögliche Anzahl von Zündimpulsen erforderlich ist, und dies auch nur, wenn sich eine vorausgegangene Zündung als Fehlzündung erweist oder der Leistungsschalter aus sonstigen Gründen in den nicht leitenden Zustand zurückgesprungen ist. Nur dann erfolgt eine weitere Nachzündung, und zwar im Wesentlichen unmittelbar im Anschluss an den festgestellten fehlerhaften Schaltzustand des Leistungsschalters.

## Patentansprüche

1. Elektrowerkzeuggerät für den Betrieb mit
Wechselstrom, mit einem Elektromotor (2), einer elektronischen Steuereinrichtung (6) und einem elektrischen Leistungsschalter (4) zum Ansteuern des Elektromotors (2), wobei die Steuereinrichtung (6) so ausgebildet ist, dass das Potential am Detektionseingang (18) nach einem jeweiligen Zünden des Leistungsschalters (4) überwacht wird und
anhand dessen geprüft wird, ob der Leistungsschalter (4) leitend ist, und dass erneut gezündet wird, wenn der Leistungsschalter (4) nicht leitend war oder während der Überwachung in den nicht leitenden Zustand zurückgesprungen ist, und dass diese Überprüfung und gebotenenfalls erneute Zündung des Leistungsschalters (4) innerhalb einer Halbwelle der Wechselspannung wiederholt wird **dadurch gekennzeichnet, dass** das Elektrowerkzeuggerät ein Elektrohandwerkzeuggerät ist und die elektronische Steuereinrichtung (6) einen Vorspannungsausgang (16) und einen Detektionseingang (18) umfasst, die über einen einen Summationspunkt (20) aufweisenden Spannungsteiler (26) miteinander und mit der dem Elektromotor (2) zugewandten Seite des Leistungsschalters (4) verbunden sind, und dass die Überprüfung und gegebenenfalls erneute Zündung des Leistungsschalters (4) innerhalb einer Halbwelle der Wechselspannung höchstens x mal durchgeführt wird, wobei x = T_{Halbwelle} / T_{Zündfolge}
beträgt.

2. Elektrowerkzeuggerät nach Anspruch 1, **dadurch gekennzeichnet, dass** der Leistungsschalter (4) ein Triac ist.

3. Elektrowerkzeuggerät nach Anspruch 1 oder 2, **dadurch gekennzeichnet, dass** die elektronische Steuereinrichtung (6) so ausgebildet ist, dass die Überprüfung und gebotenenfalls erneute Zündung des Leistungsschalters (4) innerhalb einer Halbwelle der Wechselspannung höchstens 10 mal, insbesondere höchstens 8 mal, insbesondere höchstens 6 mal und weiter insbesondere höchstens 5 mal durchgeführt wird.

4. Elektrowerkzeuggerät nach einem oder mehreren der vorstehenden Ansprüche, **dadurch gekennzeichnet, dass** die elektronische Steuereinrichtung (6) so ausgebildet ist, dass eine Nachzündung sofort, also so rasch wie möglich erfolgt, sobald die Überprüfung des Signals am Detektionseingang ergeben hat, dass der Leistungsschalter nicht leitend ist.

5. Elektrowerkzeuggerät nach einem oder mehreren der vorstehenden Ansprüche 1-4, **dadurch gekennzeichnet, dass** die elektronische Steuereinrichtung (6) so ausgebildet ist, dass die Zündfolge 50 - 500 *µ*s, insbesondere 100 - 500 *µ*s, insbesondere 150 - 400 *µ*s und weiter insbesondere 200 - 300 *µ*s beträgt.

6. Elektrowerkzeuggerät nach einem oder mehreren der vorstehenden Ansprüche, **dadurch gekennzeichnet, dass** die elektronische Steuereinrichtung (6) so ausgebildet ist, dass die Zünddauer des Leistungsschalters (6) 5 - 40 *µ*s, insbesondere 15 - 30 *µ*s beträgt.

7. Elektrowerkzeuggerät nach einem oder mehreren der vorstehenden Ansprüche, **dadurch gekennzeichnet, dass** die elektronische Steuereinrichtung (6) einen Synchronisiereingang umfasst, um den Nulldurchgang der jeweiligen Halbwelle zu erfassen.

8. Elektrowerkzeuggerät nach einem oder mehreren der vorstehenden Ansprüche, **dadurch gekennzeichnet, dass** der Vorspannungsausgang (16) während einer positiven Halbwelle mit einer negativen Steuerspannung, insbesondere von -5 Volt, und während einer negativen Halbwelle mit einem demgegenüber höheren Potential, insbesondere Null Volt, betrieben wird.

9. Verfahren zum Betreiben eines Elektrowerkzeuggeräts nach einem oder mehreren der vorstehenden Ansprüche mit Wechselstrom, wobei mittels einer elektronischen Steuereinrichtung (6) ein Elektromotor (2) durch Phasenanschnittsteuerung unter Verwendung eines elektrischen Leistungsschalters (2) mit elektrischer Energie versorgt wird, wobei unmittelbar nach einem ersten Zünden des
Leistungsschalters (4) durch Spannungsabgriff an einem Summationspunkt eines Spannungsteilers (26) überwacht und geprüft wird, ob der Leistungsschalter (4) leitend ist, dass nach dem ersten Zünden erneut gezündet wird, wenn der Leistungsschalter nicht leitend war oder während der Überwachung in den nicht leitenden Zustand zurückgesprungen ist, und dass diese Überprüfung und gebotenenfalls erneute Zündung des Leistungsschalters (4) innerhalb einer Halbwelle der Wechselspannung wiederholt wird, **dadurch gekennzeichnet, dass** die Überprüfung und gegebenenfalls erneute Zündung des Leistungsschalters (4) innerhalb einer Halbwelle der Wechselspannung höchstens x mal durchgeführt wird, wobei x = T_{Halbwelle} / T_{Zündfolge} beträgt.

## Claims

1. An electric power tool for operating with alternating current, having an electric motor (2), an electronic control device (6) and an electric power switch (4) for actuating the electric motor (2), wherein the control device (6) is designed such that the potential across the detection input (18) after respective triggering of the power switch (4) is monitored, and, on the basis of this, a check is made as to whether the power switch (4) is on, and that it is triggered again if the power switch (4) was not on or had returned to the off state during monitoring, and that this check and possibly renewed triggering of the power switch (4) is repeated with a half-wave of the AC voltage,
**characterized in that** the electric power tool is a handheld electric power tool and the electronic control device (6) comprises a bias voltage output (16) and a detection input (18) which are connected to one another and to that side of the circuit breaker (4) which faces the electric motor (2) via a voltage divider (26) which has a summation point (20), and **in that** the check and possibly renewed triggering of the power switch (4) is carried out at most x times within a half-wave of the AC voltage, where x = T_{half-wave}/T_{triggering} sequence.

2. The electric power tool as claimed in claim 1, **characterized in that** the power switch (4) is a triac.

3. The electric power tool as claimed in claim 1 or 2, **characterized in that** the electronic control device (6) is designed such that the check and possibly renewed triggering of the power switch (4) are carried out at most 10 times, in particular at most 8 times, in particular at most 6 times and further particularly at most 5 times, with a half-wave of the AC voltage.

4. The electric power tool as claimed in one or more of the preceding claims, **characterized in that** the electronic control device (6) is formed such that post-triggering is performed immediately, that is to say as rapidly as possible, as soon as the check of the signal at the detection input has shown that the power switch is off.

5. The electric power tool as claimed in one or more of the preceding claims 1-4, **characterized in that** the electronic control device (6) is designed such that the triggering sequence lasts for 50-500 µs, in particular 100-500 µs, in particular 150-400 µs and further particularly 200-300 µs.

6. The electric power tool as claimed in one or more of the preceding claims, **characterized in that** the electronic control device (6) is designed such that the triggering period of the power switch (4) lasts for 5-40 µs, in particular 15 - 30 µs.

7. The electric power tool as claimed in one or more of the preceding claims, **characterized in that** the electronic control device (6) comprises a synchronization input in order to detect the zero crossing of the respective half-wave.

8. The electric power tool as claimed in one or more of the preceding claims, **characterized in that** the bias voltage output (16) is operated with a negative control voltage, in particular of -5 volts, during a positive half-wave, and with a comparatively higher potential, in particular zero volt, during a negative half-wave.

9. A method for operating an electric power tool as claimed in one or more of the preceding claims with alternating current, wherein an electric motor (2) is supplied with electrical energy by means of an electronic control device (6) by virtue of phase gating control using an electric power switch (2), wherein monitoring is performed immediately after initial triggering of the power switch (4) by tapping off the voltage at a summation point of a voltage divider (26) and a check is made as to whether the power switch (4) is on, wherein after the initial triggering, the power switch is triggered again if the power switch was not on or had returned to the off state during monitoring, and wherein this check and possibly renewed triggering of the power switch (4) is repeated within a half-wave of the AC voltage, **characterized in that** the check and possibly renewed triggering of the power switch (4) is carried out at most x times within a half-wave of the AC voltage, where x = T_{half-wave}/T_{triggering} sequence.

## Revendications

1. Outillage électrique pour une utilisation avec du courant alternatif, comprenant un moteur électrique (2), une installation de commande électronique (6) et un interrupteur électrique de puissance (4) pour enclencher le moteur électrique (2), dans lequel l'installation de commande (6) est agencée de telle manière que le potentiel de l'entrée de détection (18) reste contrôlé après chaque allumage respectif de l'interrupteur de puissance (4), et
au moyen duquel on vérifie, si l'interrupteur de puissance (4) est conducteur, et qui est allumé à nouveau, lorsque l'interrupteur de puissance (4) n'était pas conducteur ou retournait à l'état non conducteur pendant la période de contrôle, et que cette vérification et si nécessaire le nouvel allumage de l'interrupteur de puissance (4) se répètent pendant une demi-onde de la tension alternative, **caractérisé en ce que**, l'outillage électrique est un outillage électrique manuel et l'installation de commande électronique (6) comporte une sortie de pré-tension (16) et une l'entrée de détection (18), qui sont couplés ensemble par l'intermédiaire d'un point de sommation (20) comportant un diviseur de tension (26) par rapport au côté orienté de l'interrupteur de puissance (4) avec le moteur électrique (2), et que le contrôle et le cas échéant le nouvel allumage de l'interrupteur de puissance (4) doit être effectué au plus x fois pendant une demi-onde de la tension alternative, où x= T_{demi-onde} / T_{séquence d'allumage}.

2. Outillage électrique selon la revendication 1, **caractérisé en ce que** l'interrupteur de puissance (4) est un Triac.

3. Outillage électrique selon les revendications 1 ou 2, **caractérisé en ce que** l'installation de commande électronique (6) est configurée de telle manière que la vérification et, si nécessaire le nouvel allumage de l'interrupteur de puissance (4) au cours d'une demi-onde de la tenson alternative, peut être effectué au plus dix fois, en particulier au plus huit fois, en particulier au plus 6 fois et plus en particulier au plus 5 fois.

4. Outillage électrique selon une ou plusieurs des revendications précédentes, **caractérisé en ce que** l'installation de commande électronique (6) est configurée de telle manière qu'un ré-allumage soit enclenché aussi rapidement que possible, dès que la vérification du signal à l'entrée de la détection est effectuée, que l'interrupteur de puissance n'est pas conducteur.

5. Outillage électrique selon une ou plusieurs des revendications 1 - 4, **caractérisé en ce que** l'installation de commande électronique (6) est configurée de telle manière que l'ordre d'allumage est de 50 - 500 µs, en particulier de 100 - 500 µs, en particulier de 150 - 400 µs et plus en particulier de 200 - 300 µs.

6. Outillage électrique selon une ou plusieurs des revendications précédentes, **caractérisé en ce que** l'installation de commande électronique (6) est configurée de telle manière que la durée d'allumage de l'interrupteur de puissante (4) est de 5 - 40 µs, en particulier de 15 - 30 µs.

7. Outillage électrique selon une ou plusieurs des revendications précédentes, **caractérisé en ce que** l'installation de commande électronique (6) comporte une entrée de synchronisation, pour inclure le passage au zéro du la demi-onde correspondante.

8. Outillage électrique selon une ou plusieurs des revendications précédentes, **caractérisé en ce que** la sortie de pré-tension (16), pendant une demi-onde positive, avec une tension négative, est actionnée en particulier à -5 volts, et pendent une demi-onde négative, avec un potentiel opposé plus élevé, en particulier de zéro volt.

9. Procédé pour l'utilisation avec du courant alternatif d'un outillage électrique selon une ou plusieurs des revendications précédentes, dans lequel, au moyen d'une installation de commande électronique (6), un moteur électrique (2) peut être alimenté en énergie électrique par la commande de coupures de phase sous l'influence d'un interrupteur électrique de puissance (4), dans lequel immanquablement après une première alimentation de l'interrupteur de puissance (4) par prélèvement de tension à un point de sommation d'un diviseur de tension (26) est surveillé et contrôlé, si l'interrupteur de puissance est conducteur, pour qu'il soit réalimenté après un premier allumage, si l'interrupteur de puissance n'était pas conducteur ou retournait à l'état non conducteur pendant la phase de contrôle, et que cette vérification et si nécessaire le nouvel allumage de l'interrupteur de puissance (4) se répètent pendant une demi-onde de la tension alternative, **caractérisé en ce que** le contrôle et le cas échéant le nouvel allumage de l'interrupteur de puissance (4) doit être effectué au plus x fois pendant une demi-onde de la tension alternative, où x= T_{demi-onde} / T_{séquence d'allumage}.
